# EUROPEAN PATENT SPECIFICATION

(11) **EP 0 403 451 B1**
(45) Date of publication and mention of the grant of the patent: **17.08.1994**
(21) Application number: 90850163.8
(22) Date of filing: 03.05.1990
(51) Int. Cl.: H04Q 1/24, H04Q 11/04

(54) **A method and arrangement for detecting and localizing errors or faults in a multi-plane unit incorporated in a digital time switch**
Verfahren und Vorrichtung zur Detektierung und Ortung von Fehlern in einer mehretagigen Einheit eines digitalen Zeitumschaltungsmoduls
Méthode et dispositif de détection et localisation d'erreurs pour une unité à plusieurs étages dans un commutateur de temps numérique

(30) Priority: 16.06.1989 SE 8902192
(43) Date of publication of application: 19.12.1990
(73) Proprietor: TELEFONAKTIEBOLAGET L M ERICSSON, 126 25 Stockholm (SE)
(72) Inventor: Bergkvist, Jan Anders, S-126 64 Hägersten (SE)
(74) Representative: Lövgren, Tage

(56) References cited:
- EP-A- 0 273 249
- DE-A- 3 334 765
- FR-A- 2 399 162
- US-A- 4 345 324
- INTERNATIONAL SWITCHING SYMPOSIUM, SESSION 142, PAPER 3, 25.10.76, KYOTO, PAGES 1-6, A.S. PHILIP: "A multipurpose digital switching system"
- PATENT ABSTRACTS OF JAPAN, VOL. 3, NO. 026 (E-095)
- PATENT ABSTRACTS OF JAPAN, VOL. 6, NO. 147 (E-123)

## Description

### TECHNICAL FIELD

The present invention relates to a digital time switch of the kind which is provided with equipment in several parallel working planes. The digital time switch is included in a telecommunication system which operates with pulse code modulation and time multiplex. More specifically, the invention relates to a method and an arrangement for error/fault detection and error/fault localization in a multi-plane unit incorporated in a switch of the aforesaid kind.

### BACKGROUND ART

In order to achieve a high degree of reliability in extensive telecommunication systems, it is normal for functional units in the system switch to utilize several, mutually-parallel planes, each containing mutually-identical equipment. The data-flow entering such a multi-plane unit is distributed to the parallel planes contained therein. The data-flow passes through the equipment in each of said planes and an output data signal is then delivered from respective planes. The occurrence of an error, or a fault, in any one of the planes can be discovered, by comparing the data signals delivered by the various planes, bit for bit, and a majority-selection of data-flow can be delivered from the unit by making a majority selection on the basis of said comparison. The comparison and the majority-selection are effected in a comparator/majority-selection device connected to the multi-plane unit.

As before mentioned, the comparator/majority-selection device is operative to make a comparison between the data signals exiting from the planes, bit-for-bit in real time, and delivers an output signal which constitutes a majority decision. In order for this to be possible, the output data signals must be delivered from the parallel planes synchronously, i.e. the delays through the three planes must be of mutually equal value, since otherwise the comparator/majority-selection device will produce an erroneous signal.

Japanese Patent Specification JP 60-10996 describes a time selector which has time selecting devices in three planes. Each plane includes selector storage devices 1a, 1b, 1c and control storage devices 3a, 3b, 3c. A majority-selection is made from the connection information from the three planes in a majority-selector device 8 and the majority-selected connection information is delivered to the selector storage devices 1a, 1b, 1c. A majority selection is made on information from the selector storage devices 1a, 1b, 1c in a majority-selection device 7, and delivered from the selector storage devices 1a, 1b, 1c on an output line 5.

British Patent Specification GB 1570 113 describes an invention relating to electronic systems which include equipment in parallel planes. The equipment operates with majority-selection, so as to obtain correct output signals even though an error/fault might occur. The object of the invention is to provide an arrangement for localizing errors/faults in the system. The error/fault localization is program-controlled and functions on the concept of testing one unit at a time. The selection information comes from a programmable read only memory (PROM). Each plane includes a device WSU for wave shape selection, these devices WSU being operative to cause the unit selected for testing to carry out a given operation so that a waveshape corresponding to said operation is formed. The generated waveshapes produced in the parallel planes in said unit are sent to a comparitor CCU, in which they are compared, therewith enabling the detection of an error/fault in any one of the planes.

The European patent EP 273 249 relates to a fault tolerant switch with selectable operating modes. The patent discloses a method for providing fault tolerant transmission of electrical signals through a transmission device. Putatively identical signals at corresponding outputs of the transmission device are compared and at least one correct output signal is generated therefrom. The comparison is being made on the entire signals.

The French patent FR-A-2 399 162 pertains to detection and localization of faults in a multiplexed network for transmission of digital data signals. The digital signals are coming into the network at junctions (J1-J128). The digital signals are then multiplexed, distributed to doubled modules (A1-A7,B1-B7) in the network and finally demultiplexed and delivered from the network. For detecting faults comparators (C1-C7) are connected to corresponding A- and B-modules. The A- and B-modules generates a parity bit GB and parity bits from corresponding modules (A1,B1) being compared in the corresponding comparator (C1). The comparators (C1-C7) produces anticoincidence signals which are delivered to a register 4 when a fault is present. A control device 5, connected to the register 4, delivers antcoincidence signals to a test device 6 for determining the detected faults.

The document INTERNATIONAL SWITCHING SYMPOSIUM, SESSION 142, PAPER 3, 25 October 1976, KYOTO, PAGES 1-6, A.S. PHILIP: "A Multipurpose Digital Switching System" discloses a hardware central control unit (CCU), triplicated in order to provide adequate security and to facilitate identification of a faulty unit. Two-out-of-three majority decision is also disclosed in this text passage.

The German patent DE-A-3 334 765 relates to a testdevice for detecting errors in a control unit in a telephone switch. The control unit, disclosed in the figure, includes for security reasons a pair of processors CP0, CP1, connected by a doubled bussystem B:CMY0, B:CMY1 to a memory CMY. Each processor is connected to a separate EDC-arrangement EDC0, EDC1 (Error Detection and Correction). Each EDC-arrangement delivers partly binary signals on outgoing lines Li, partly EDC-coded check-bits of the binary signals. The EDC-coded check-bits are delivered on outgoing lines Ledc. Corresponding EDC-coded check-bits from the parallell EDC-arrangement are compared in AND-gates VE for error detection. The check bits from the binary signals are generated in a parity network included in the EDC-arrangement.

The Patent Abstracts of Japan, vol.3 no. 026 (E-095), 6 March 1979, JP-A-54 5416 relates to checking of high reliability with a simple circuit constitution by comparing and contrasting the cyclic redundancy operation results of code blocks before and after recording.

The Patent Abstracts of Japan, vol.6 no. 147 (E-123), 6 August 1982, JP-A-57 68944 relates to a CRC Operating System to simplify the circuit and to speed up operation time, by using a plurality of data buffer registers and a parity check circuit checking the normality of the registers and making partial parallel operation of the cyclic redundancy check.

### DISCLOSURE OF THE INVENTION

A multi-plane unit utilizes a comparator/majority-selection device for delivering a correct output data signal from the multi-plane unit. It is therefore important that a certain error/fault will not occur simultaneously in two or more of the planes, since the majority-selection device would otherwise deliver an erroneous output data signal. Consequently, if a first error/fault occurs in one of the planes, it is necessary to remedy this error/fault as quickly as possible, in order to avoid the risk of the same error/fault occurring in a parallel plane before the first error/ fault is remedied.

Accordingly, the object of the present invention is to provide a method and an arrangement by means of which an error/fault occurring in one plane in a multi-plane unit can be detected and the faulty equipment accurately localized.

The British Patent GB 1 570 113 attempts to solve the aforesaid problem by localizing errors/faults in a system which utilizes equipment in several parallel planes. The drawback with this method is that a large amount of equipment is required, since error/fault localization is program controlled and since the localization of errors/faults does not utilize the through-passing data-flow.

The present invention is characterized by the features set forth in the following claims, and in brief, comprises the step of generating in a multi-plane unit having sections of equipment in three parallel working planes, for each of corresponding parallel sections at corresponding locations, a compressed version of the data signal entering the section and/or of the data signal exiting from said section. Corresponding compressed data-signals are then compared, and an alarm is given when the comparison shows that the compared, compressed data signals differ from one another. The compressed data signals are generated over given time intervals. If the data-flow through the multi-plane unit has a frame-format of some configuration or other, an appropriate time interval in this regard is one compression per frame.

The inventive method and arrangement results in a reduction in the quantity of data handled during the comparison process, since the comparison is made on the basis of compressed signals instead of on the basis of the whole of the data-flow. Because the comparison material has been made much smaller, there is less need for the comparison to manage large quantities of data.

The requirement for the signals through the multi-plane unit to be synchronous, is limited to those signals which are delivered to the comparator/majority-section device from the last section in each of said planes. In other respects, the data signals through the unit need not be synchronous, since comparisons are made between compressed versions of the data-flow. On the other hand, comparisons must, of course, be made between compressed signals which derive from one and the same time interval or one and the same frame of the through-passing data-flow.

Since the compressed signals include a smaller quantity of information per frame than the original signals, the comparison can be made under relatively quiet conditions, which means that the comparison need not be made in the immediate physical vicinity of each section, but can be carried out centrally, and also enables several section units to utilize one and the same time-shared comparator. A section unit includes corresponding parallel sections having mutually identical equipment.

### BRIEF DESCRIPTION OF THE DRAWINGS

The invention will now be described in more detail with reference to the accompanying drawings in which
Figure 1 is a block schematic of a multi-plane unit which incorporates an inventive arrangement; and
Figure 2 illustrates a time-shared comparator in accordance with the invention.

### BEST MODES OF CARRYING OUT THE INVENTION

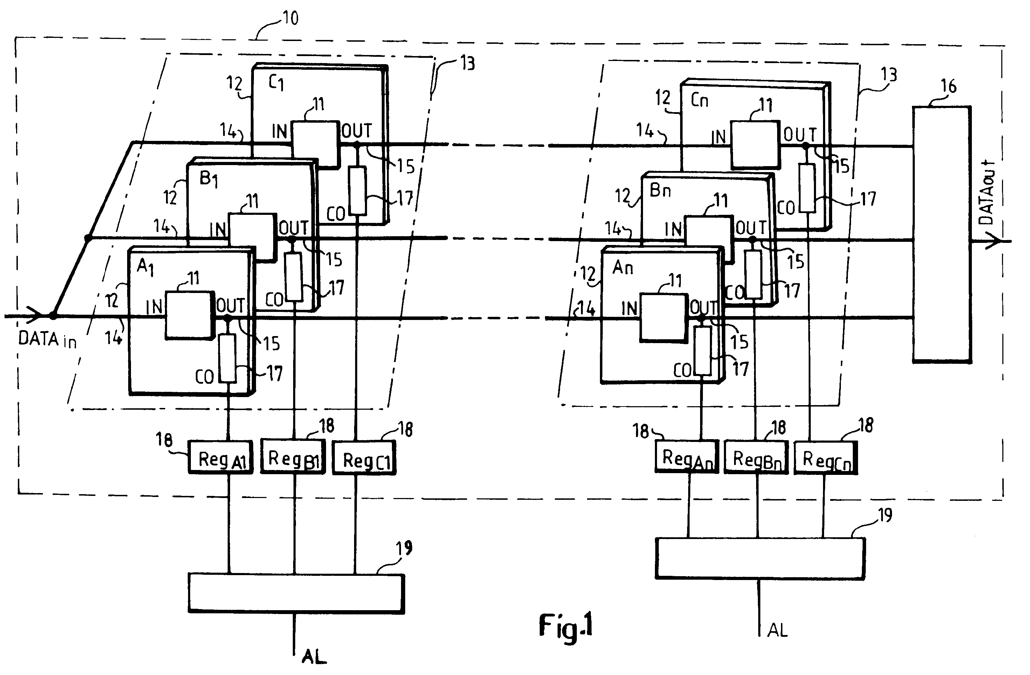

Figure 1 is a block schematic of a multi-plane unit 10 incorporated in a digital time switch. The multi-plane unit 10 has three parallel working planes A, B, C each provided with mutually identical equipment 11. The equipment 11 in each of the planes A, B, C is divided into sections, and the planes are also divided into sections in a corresponding manner. The plane A is divided into n number of sections 12, designated A₁,A_{2.}..., Aₙ. The remaining planes B, C are divided correspondingly into sections 12, designated B₁, B₂...., Bₙ and C₁, C₂. ..., Cₙ Corresponding parallel sections 12 in the three parallel working planes, for instance the sections A₁, B₁, C₁, contain mutually identical equipment 11 and form a section unit 13. The equipment incorporated in the section units may, for instance, have the form of different types of data storage devices. The first section unit 13 includes the sections A₁, B₁, C₁, the second section unit (not shown in the Figure) includes the sections A₂, B₂, C₂, and so on. The equipment 11 associated with the plane A is connected together by data lines 14 entering the sections A₁, A₂,...., Aₙ of the plane and by data lines 15 exiting from said plane sections. The equipment associated with the plane B and the equipment associated with the plane C are respectively connected in a corresponding manner.

Data-flow DATAᵢₙ entering the multi-plane unit 10 is distributed to the parallel sections A₁, B₁, C₁ in the first section unit 13. The equipment 11 in each of the sections A₁, B₁, C₁ therewith receives an incoming data signal IN on the data input line 14 of each section. The incoming data signals IN in the first section unit 13 thus correspond to the data-flow DATAᵢₙ entering the multi-plane unit 10. The equipment 11 in each of the sections A₁, B₁, C₁ in the first section unit processes the incoming data signal IN, whereafter said equipment 11 delivers an outgoing data signal OUT on the section-output data line 15.

The data output signals OUT are conveyed further to the next section unit 13 and, prior to having passed through the equipment of said second unit, constitute incoming data signals IN. Incoming data signals IN and outgoing data signals OUT pass through the equipment in remaining section units 13 in a similar manner, wherein said data signals constitute a data-flow which passes through the multi-plane unit. When the through-passing data-flow having passed the equipment 11 in the last section unit 13 in line, the output data signals OUT are transmitted from said last unit to a comparator/majority selection device 16. The signals entering the device 16 are compared bit-for-bit and are majority selected, and a majority-selected output data-flow DATAₒᵤₜ is delivered from the multi-plane unit 10.

In order to enable an error/fault in the unit 10 to be detected and localized accurately, each section 12 includes a compression device 17 connected to the output data line 15 of the section 12. The compression device 17 is operative to generate a compressed version of the output data signal OUT without influencing said signal. This signal generation results in a compressed data signal CO. If the data-flow in the multi-plane unit 10 is divided into frames, a compressed signal CO will be conveniently formed for each frame information in the output data signals OUT. It is also possible to form the compressed signal CO from information in some other interval. Each of the compression devices 17 is connected to a register 18 in which a compressed signal CO can be temporarily stored. The register 18 also contains information relating to the frame from which the compressed signal CO originated. The registers 18 corresponding to sections A₁, B₁, C₁ in the first section unit 13 are designated Reg A₁, Reg B₁, Reg C₁ illustrated in Figure 1. The registers 18 connected to remaining sections are designated in a corresponding manner. In order to enable errors/faults to be localized, a comparator 19 is connected to the registers 18 associated with one and the same section unit, so as to compare compressed signals CO from corresponding sections 12. A comparator 19 is therefore connected to the registers 18 designated Reg A₁, Reg B₁, Reg C₁, and a further comparator 19 is connected to registers 18 designated Reg_{An}, Reg_{Bn}, Reg_{Cn}, and so on. The comparison entails comparing compressed signals CO which have their origin in output data signals OUT from one and the same frame, wherein the compared signals derive from one and the same data quantity. When the compared compressed-signals CO are identical, no error and/or fault is detected, but if one of the compared compressed-signals CO differs from the other two in some way or another, this will indicate a fault or error in the equipment 11 in the section 12 from which the deviating signal was delivered, which results in the issue of an alarm signal AL by the comparitor 19.

The aforesaid generation of compressed signals CO may be effected, for instance, in accordance with the Cyclic Redundancy Check (CRC) principle, in which case the compression device 17 includes shift registers and exclusive-or-gates. Depending on the frame-size of the through put data-flow and the desired probability of error/fault discovery, there is selected an appropriate compression algorithm which decides how shift registers and exclusive-or-gates shall be arranged in the compression devices 17. When a compression device 17 has received information from a frame in the output data signal OUT, the shift registers will obtain a reduced quantity of information, i.e. a reduced number of bits in relation to the number of bits in a frame. The reduced quantity of information is delivered from the shift register of the compression device 17 to the register 18 in the form of a compressed signal CO. As before described, a comparison is then made between the information contained in three registers 18 associated with sections 12 of one and the same section unit 13, this comparison being made in the comparator 19 connected to said section unit. One comparison at a time compares corresponding bits from the three registers 17. If one of the compared bits differs from the two remaining bits, the aforesaid alarm signal AL is given, this signal also indicating the parallel section from which the deviating bit arrived. The equipment in the faulty section can therewith be replaced.

The aforedescribed procedure enables errors/faults to be detected in a multi-plane unit, both with respect to single intermittent errors/faults and with respect to a continuous error/fault state. A deviation in any one of the sections results, with desired probability, in the compressed version of the output data signal of the faulty section to deviate from the other output data signals.

It is not necessary to generate the compressed signal CO at that location in the section at which the output data signal OUT is transported, since the signal can also be generated at other locations in said section. The main criterion is that the compressed version is generated at corresponding locations in sections associated with one and the same section unit, so that the data quantity from which the compared compressed signals CO originate is one and the same. For instance, it is possible instead to generate, for each section, a compressed version of the incoming data signal IN and to effect a comparison in the afore-described manner, wherein a detected error/fault indicates a fault in the preceding section unit. Alternatively, there may be generated for each section both a compressed version of the incoming data signal IN and a compressed version of the outgoing data signal OUT, so as to detect both error/fault in the equipment and in the data transmission between two section units.

Since the compressed signals CO, for each frame, include a smaller quantity of information than the original signals, the comparisons can be made under relatively quiet conditions, therewith enabling the comparisons to be made centrally and remote from the immediate physical vicinity of the sections. This also enables a time-shared comparator to be used in common by several section units.

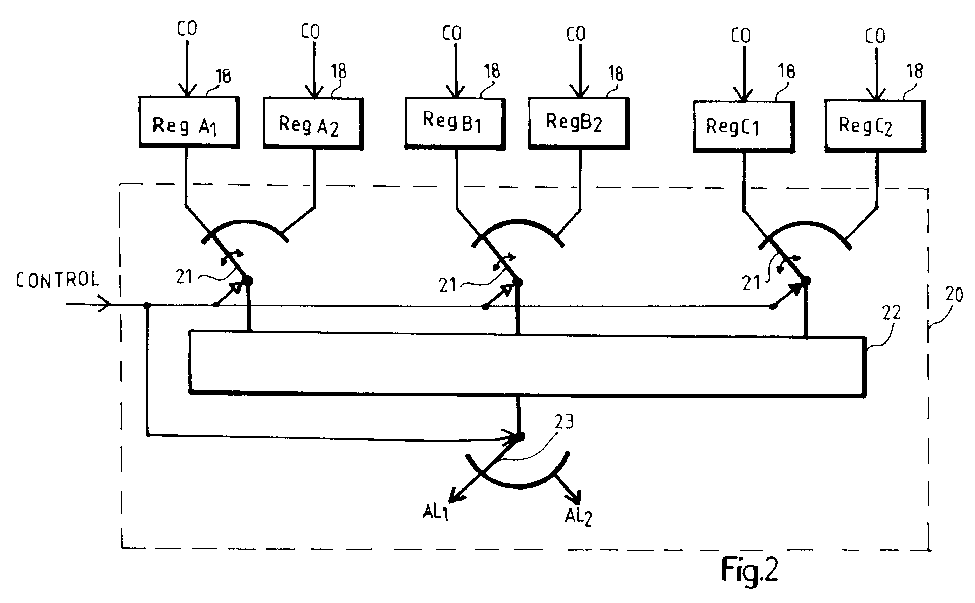

Figure 2 illustrates a time-shared comparator 20 which is operative to carry-out comparisons on compressed signals CO from the first section unit, these signals being stored intermediately in registers 18 designated Reg A₁, Reg B₁, Reg C₁, and also to carry-out comparisons on compressed signals CO from the second section unit, these signals being stored intermediately in the registers 18 designated Reg A₂, Reg B₂, Reg C₂. The comparison carried-out on the signals from the two section units is effected alternately under the control of a control signal CONTROL, wherein a comparison is made on the signals from both the first and the second section units during the period of one frame. The control signal CONTROL therewith controls three register switches 21 in a manner such that the registers Reg A₁, Reg B₁, Reg C₁ of the first section unit are connected to a comparator 22 during a first part of a frame. During this first part of said frame, the control signal CONTROL is also operative to control an alarm switch 23 in a manner to cause an alarm signal AL₁ associated with the first section unit to be given if an error/fault is detected during said comparison. During a second part of said frame, the control signal CONTROL is operative to control said register switch 21 in a manner to connect the registers Reg A₂, Reg B₂, Reg C₂ of the second section unit to the comparator 22 instead. During this second part of the frame, the alarm switch 23 is controlled so that an alarm signal AL₂ associated with the second section unit is given when an error/fault is detected.

## Claims

1. A method used in a multi-plane unit (10) in a digital time switch, said unit (10) including sections (12) of electrical equipment (11) in three parallel working planes, each section being connected in series within each plane and each section being electrically identical to corresponding sections in other planes, wherein electrical equipment (11) in each of the sections (12) receives an incoming data signal (IN) on a data line (14) entering the section (12) and produces an output data signal (OUT) on a data line (15) exiting from said section, these data signals forming a data-flow passing through the multi-plane unit, and wherein the multi-plane unit (10) includes a comparator/majority-selection device (16) in which output data signals (OUT) from the last section in each of said planes are compared and majority-selected, **characterized** in that for the purpose of detecting and localizing errors and/or faults in the unit (10) the method comprises the following steps:
- compressing each output data signal (OUT) in corresponding sections of each plane and generating a compressed data signal (CO);
- comparing said compressed data signals (CO) from corresponding sections and generating an alarm when a difference is detected.

2. A method according to Claim 1, **characterized** in that the generation of compressed data signals (CO) is effected framewise, and in that said comparison is also effected framewise such that compared compressed data signals (CO) will originate from one and the same data quantity.

3. A method according to Claim 2, **characterized** in that the compressed data signals (CO) are generated in accordance with the Cyclic Redundancy Check, (CRC), principle.

4. A multi-plane unit (10) in a digital time switch, said unit (10) including sections (12) of electrical equipment (11) in three parallel working planes, each section being connected in series within each plane and each section being electrically identical to corresponding sections in the other planes, wherein the electrical equipment (11) in each of the sections (12) receives an incoming data signal (IN) on a data line (14) entering the section (12) and produces an output data signal (OUT) on a data line (15) leaving said section, and wherein the multi-plane unit (10) includes a comparator/majority-selection device (16) in which output data signals (OUT) from the last section in each of said planes (11) are compared and majority-selected, **characterized** in that for the purpose of detecting and localizing errors and/or faults in the unit (10), each section includes a compression device (17) connected to the incoming data line (14) of the section and/or a compression device (17) connected to the data line (15) leaving said section so as to generate for each of said section units (13) at corresponding locations in respective sections (12) a compressed version of the incoming data signal (IN) and/or of the outgoing data signal (OUT), such that a compressed data signal (CO) is formed for each compression device (17); in that each compression device (17) is connected to a register (18) operative to store intermediately the compressed data signal (CO); and in that a comparator (19) is connected to corresponding registers (18) so that corresponding compressed data signals from corresponding sections are compared in said comparator (19); and in that the comparator (19) is operative to produce an alarm when a difference is detected between the compared compressed data signals (CO).

5. An arrangement according to Claim 4, **characterized** in that corresponding section units (12) in the three parallell working planes form a section unit (13) and in that the comparator has the form of a time-shared comparator (20) which is used by several section units (13) in common.

## Patentansprüche

1. Ein Verfahren, welches in einer mit mehreren Ebenen versehenen Einheit (10) in einem digitalen Zeitschalter verwendet wird, wobei die Einheit (10) Abschnitte (12) mit elektrischem Gerät (11) in drei parallelen Arbeitsebenen umfaßt, jeder Abschnitt innerhalb jeder Ebene in Reihe verbunden ist und jeder Abschnitt zu entsprechenden Abschnitten in anderen Ebenen elektrisch identisch ist, wobei elektrisches Gerät (11) in jedem der Abschnitte (12) ein ankommendes Datensignal (EIN) auf einer an dem Abschnitt (12) ankommenden Datenleitung (14) empfängt und ein Ausgangsdatensignal (AUS) auf einer von dem Abschnitt abgehenden Datenleitung (15) erzeugt, wobei diese Datensignale einen durch die mit mehreren Ebenen versehene Einheit laufenden Datenfluß bilden, und wobei die mit mehreren Ebenen versehene Einheit (10) eine Vergleicher/Majoritäts-Auswahleinrichtung (16) umfaßt, in der Ausgangsdatensignale (AUS) von dem letzten Abschnitt in jeder der Ebenen verglichen werden und einer Majoritäts-Auswahl ausgesetzt werden,
dadurch **gekennzeichnet**, daß zum Zwecke einer Erfassung und einer Lokalisierung von Fehlern und/oder Ausfällen in der Einheit (10) das Verfahren die folgenden Schritte umfaßt:
- Komprimierung jedes Ausgangsdatensignals (AUS) in entsprechenden Abschnitten jeder Ebene und Erzeugung eines komprimierten Datensignals (CO); und
- Vergleichen der komprimierten Datensignale (CO) von entsprechenden Abschnitten und Erzeugen eines Alarms, wenn ein Unterschied erfaßt wird.

2. Ein Verfahren nach Anspruch 1, dadurch gekennzeichnet, daß die Erzeugung von komprimierten Datensignalen (CO) rahmenweise bewirkt wird, und daß der Vergleich ebenfalls rahmenweise so bewirkt wird, daß verglichene, komprimierte Datensignals (CO) von ein und dergleichen Datenmenge abstammen.

3. Ein Verfahren nach Anspruch 2, dadurch gekennzeichnet, daß die komprimierten Datensignale (CO) gemäß dem zyklischen Blocksicherungs-Überprüfungs (CRC)Prinzip erzeugt werden.

4. Eine mit mehreren Ebenen versehene Einheit (10) in einem digitalen Zeitschalter, wobei die Einheit (10) Abschnitte (12) mit elektrischem Gerät (11) in drei parallelen Arbeitsebenen umfaßt, wobei jeder Abschnitt innerhalb jeder Ebene in Reihe verbunden ist und jeder Abschnitt zu entsprechenden Abschnitten in den anderen Ebenen elektrisch identisch ist, wobei das elektrische Gerät in jedem der Abschnitte (12) ein ankommendes Datensignal (EIN) auf einer an dem Abschnitt (12) ankommenden Datenleitung (14) empfängt und ein Ausgangsdatensignal auf einer von dem Abschnitt abgehenden Datenleitung (15) erzeugt, und wobei die mit mehreren Ebenen versehene Einheit (10) eine Vergleicher/Majoritäts-Auswahleinrichtung (16) umfaßt, in der Ausgangsdatensignale (AUS) von dem letzten Abschnitt von jeder der Ebenen (11) verglichen und einer Majoritäts-Auswahl ausgesetzt werden,
dadurch **gekennzeichnet**, daß
zum Zwecke einer Erfassung und Lokalisierung von Fehlern und/oder Ausfällen in der Einheit (10) jeder Abschnitt eine mit der ankommenden Datenleitung (14) des Abschnitts verbundene Kompressionsseinrichtung (17) und/oder eine mit der von dem Abschnitt abgehenden Datenleitung (15) verbundene Kompressionseinrichtung (17) umfaßt, um so für jede der Abschnittseinheiten (13) an entsprechenden Stellen in jeweiligen Abschnitten (12) eine komprimierte Version des ankommenden Datensignals (EIN) und/oder des abgehenden Datensignals (AUS) derart zu erzeugen, daß ein komprimiertes Datensignal (C0) für jede Kompressionseinrichtung (17) gebildet wird; daß jede Kompressionseinrichtung (17) mit einem Register (18) verbunden ist, dessen Funktion darin besteht, das komprimierte Datensignal (C0) zwischenzuspeichern; und daß ein Vergleicher (19) mit entsprechenden Registern (18) verbunden ist, so daß entsprechende komprimierte Datensignale von entsprechenden Abschnitten in dem Vergleicher (19) verglichen werden; und daß die Funktion des Vergleichers (19) darin besteht, einen Alarm zu erzeugen, wenn zwischen den verglichenen komprimierten Datensignalen (C0) ein Unterschied erfaßt wird.

5. Eine Anordnung nach Anspruch 4, dadurch gekennzeichnet, daß entsprechende Abschnittseinheiten (12) in den drei parallelen Arbeitsebenen eine Abschnittseinheit (13) bilden und daß der Vergleicher die Form eines Vergleichers (20) im zeitlich geteilten Betrieb aufweist, welcher von mehreren Abschnittseinheiten (13) gemeinsam verwendet wird.

## Revendications

1. Un procédé utilisé dans une unité à plusieurs plans (10) dans un commutateur temporel numérique, cette unité (10) comprenant des sections (12) d'équipement électrique (11) dans trois plans de travail parallèles, chaque section étant connectée en série dans chaque plan et chaque section étant électriquement identique à des sections correspondantes dans d'autres plans, dans lequel l'équipement électrique (11) dans chacune des sections (12) reçoit un signal de données entrant (IN) sur une ligne de données (14) qui entre dans la section (12), et il produit un signal de données sortant (OUT) sur une ligne de données (15) qui sort de cette section, ces signaux de données formant un flux de données qui traverse l'unité à plusieurs plans, et dans lequel l'unité à plusieurs plans (10) comprend un comparateur/dispositif de sélection par majorité (16) dans lequel des signaux de données de sortie (OUT) provenant de la dernière section dans chacun des plans sont comparés et font l'objet d'une sélection par majorité, **caractérisé** en ce que dans le but de détecter et de localiser des erreurs et/ou des défauts dans l'unité (10), le procédé comprend les étapes suivantes :
- on comprime chaque signal de données de sortie (OUT) dans des sections correspondantes de chaque plan, et on produit un signal de données comprimé (CO) ;
- on compare ces signaux de données comprimés (CO) provenant de sections correspondantes et on produit une alarme lorsqu'on détecte une différence.

2. Un procédé selon la revendication 1, **caractérisé** en ce que la génération de signaux de données comprimés (CO) est effectuée trame par trame, et en ce que la comparaison est également effectuée trame par trame, de façon que des signaux de données comprimés (CO) qui sont comparés proviennent d'une seule et même quantité de données.

3. Un procédé selon la revendication 2, **caractérisé** en ce que les signaux de données comprimés (CO) sont produits conformément au principe de Contrôle par Redondance Cyclique (CRC).

4. Une unité à plusieurs plans (10) dans un commutateur temporel numérique, cette unité (10) comprenant des sections (12) d'équipement électrique (11) dans trois plans de travail parallèles, chaque section étant connectée en série dans chaque plan et chaque section étant électriquement identique à des sections correspondantes dans les autres plans, dans lequel l'équipement électrique (11) dans chacune des sections (12) reçoit un signal de données entrant (IN) sur une ligne de données (14) qui entre dans la section (12), et il produit un signal de données sortant (OUT) sur une ligne de données (15) qui sort de cette section, et dans lequel l'unité à plusieurs plans (10) comprend un comparateur/dispositif de sélection par majorité (16) dans lequel des signaux de données de sortie (OUT) provenant de la dernière section dans chacun des plans (11) sont comparés et font l'objet d'une sélection par majorité, **caractérisé** en ce que dans le but de détecter et de localiser des erreurs et/ou des défauts dans l'unité (10), chaque section comprend un dispositif de compression (17) qui est connecté à la ligne de données entrante (14) de la section et/ou un dispositif de compression (17) connecté à la ligne de données (15) qui sort de la section, de façon à produire pour chacun des groupes de sections (13), à des emplacements correspondants dans des sections (12) respectives, une version comprimée du signal de données entrant (IN) et/ou du signal de données sortant (OUT), de façon qu'un signal de données comprimé (CO) soit formé pour chaque dispositif de compression (17) ; en ce que chaque dispositif de compression (17) est connecté à un registre (18) qui enregistre de façon intermédiaire le signal de données comprimé (CO) et en ce qu'un comparateur (19) est connecté à des registres (18) correspondants, de façon que des signaux de données comprimés correspondants provenant de sections correspondantes soient comparés dans le comparateur (19) ; et en ce que le comparateur (19) produit une alarme lorsqu'une différence est détectée entre les signaux de données comprimés qui sont comparés (CO).

5. Un dispositif selon la revendication 4, **caractérisé** en ce que des sections (12) correspondantes dans les trois plans de travail parallèles forment un groupe de sections (13), et en ce que le comparateur se présente sous la forme d'un comparateur travaillant en temps partagé (20) qui est utilisé en commun par plusieurs groupes de sections (13).
